# EUROPEAN PATENT APPLICATION

(11) **EP 0 540 486 A1**
(43) Date of publication of application: **05.05.1993**
(21) Application number: 92850231.9
(22) Date of filing: 02.10.1992
(51) Int. Cl.: F16J 15/32

(54) **A sealing device**

(30) Priority: 30.10.1991 SE 9103173
(71) Applicant: ITT Flygt Aktiebolag, S-171 25 Solna (SE)
(72) Inventor: Bratthäll, Johan, S-11423 Stockholm (SE); Forssberg, Alf, S-15500 Nykvarn (SE); Blixt, Bengt, S-11530 Stockholm (SE)
(74) Representative: Larsson, Sten

(57) **Abstract**

The invention concerns a seal element meant to seal off a slot between two cylinder formed surfaces, for instance when securing a mechanical face seal ring to a shaft. The element, which is arranged within a groove (3) between the two surfaces (1) and (2), is ring formed with a cross section having three sections (7), (8) and (9). The middle section (8) has a considerably shorter axial length than the other two sections, thus giving the element a considerable axial flexibility.

## Description

The invention concerns a ring formed sealing element meant to seal off the slot between two cylinder formed surfaces. The element shall then be so designed and be given qualities such, that small axial movements shall be allowed even at small forces, without the sealing function being at risk.

A certain field were such sealing elements are used is securing of a mechanical face seal ring to a shaft or to a housing. In order to make such a seal working satisfactory during all conditions, the attachment must be flexible for at least one of the seal rings, however, without loosing the sealing relative the bedding.

The so-called O-ring has so far been the dominating type of element to secure mechanical face seal rings. The O-ring is a ring made of flexible material normally having a circular cross section. The Swedish Patent No 8900936-9 shows an application where such a ring is used.

When two cylinder formed surfaces are displaced relative each other an O-ring between them will initially take up the displacement as a shearing. If the force should exceed a certain value, the O-ring will however loose contact with the underlayer as the so-called adherence force between the surface of the O-ring and the opposite surface is exceeded. For a mechanical seal however, the spring force is limited because of other conditions, which means that the force is not strong enough to break the adherence. As a consequence the movement is limited to the shear elastic area.

The cross section of an O-ring has a geometry such, that the spring constant becomes very high at axial shearing which gives a very limited movement before the shearing force in the O-ring equals the spring force available.

This is a disadvantage if a longer movement is desired before the spring force is out balanced. It is often a condition to have a longer movement than the one a conventional O-ring admits in order to obtain good sealing qualities in mechanical face seals. The invention is meant to solve these problems.

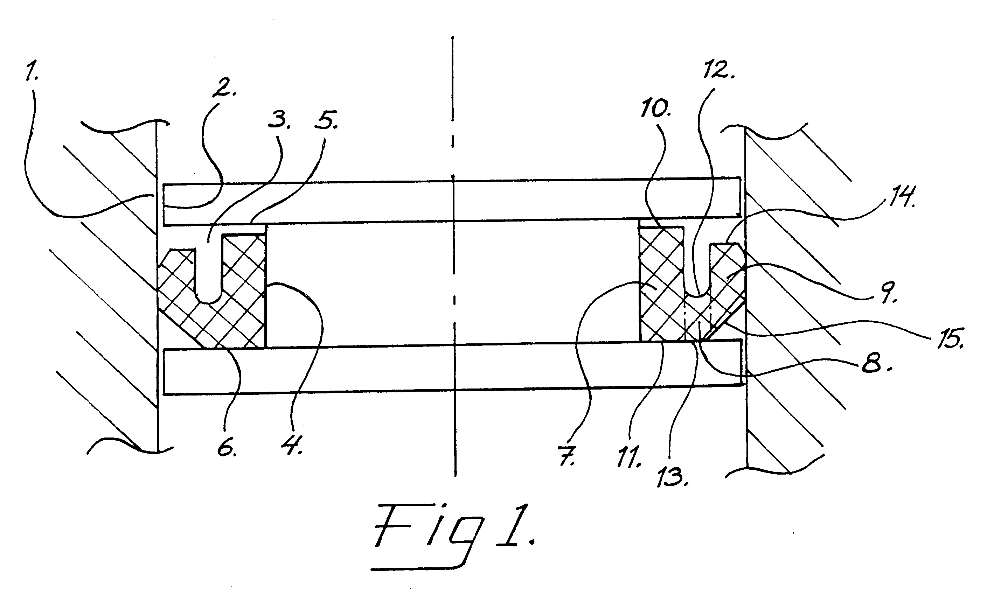

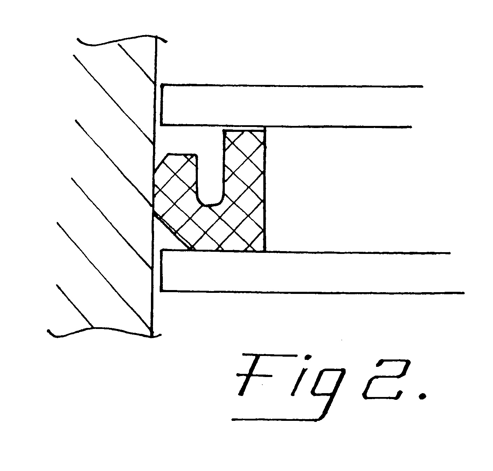

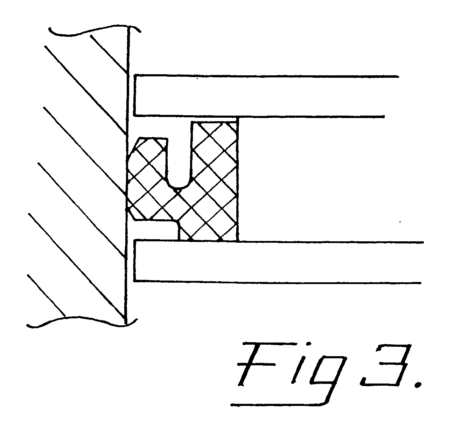

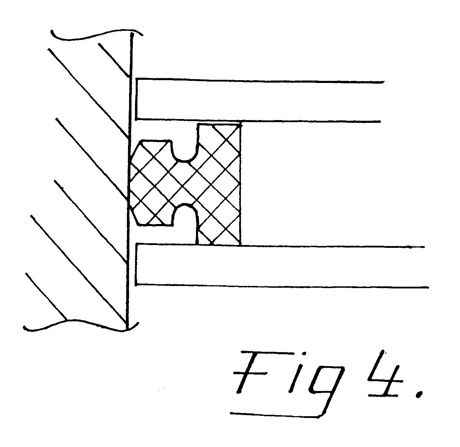

The invention is described more closely below with reference to the enclosed drawings. Fig 1 shows a sealing element according to the invention, mounted between two cylinder formed surfaces, while Figs 2-4 show different cross sections. Measures in the description below concerns the mounted sealing element.

In the drawings 1 and 2 stand for cylinder formed surfaces, 3 a groove having bottom 4 and side walls 5 and 6 respectively. 7, 8 and 9 stand for different parts of the cross section with end faces 10, 11, 12, 13 and 14, 15 respectively.

The device according to the invention is thus meant to seal the slot between the two cylinder formed surfaces 1 and 2, while admitting a certain axial relative movement. The seal element, which is arranged within a groove 3 in the surface 2, has a cross section with the three sections 7,8 and 9.

The section 7 is heading the bottom 4 of the groove 3 and has preferably an axial length corresponding with the width of the groove. The section 9 which is heading the surface 1 is axially shorter than the section 7 and this is even more true for the section 8 which is designed as a rib connecting the other two sections. The maximum axial length of the section 8 will not exceed two thirds of the full axial length of the element e g the section 7.

In order to further increase the qualities of the sealing element concerning its ability to absorb relative axial displacement between the two cylinder formed surfaces, the section 9 must fulfil certain criteria:
At least one of its axially directed end faces 14, 15 must be free from the sides 5, 6 of the groove 3. For example the distance between the end face 14 and the side wall 5 must exceed one tenth of the total height of the cross section, e g the full axial length of the section 7. This measure is regarded as a minimum. The measure for obtaining a suitable spring constant for the element will be between one fifth and two fifths of the full axial length. The design with the free space between the end faces 14, 15 and the side walls 5, 6 must not necessarily cover the full radial length. In the radial direction the free space, one tenth of the full length, must cover at least one tenth of the full radial length of the element, preferably between one quarter and half of the full radial length. It is also possible to design the end face inclined and then the mean distance between the sides 5, 6 of the groove 3 and the axial end faces 14, 15 must not be less than one tenth of the full radial length.

In the specification above it is stated that at least one of the end faces of the section 9 must be free from the surface of the groove. This is true if for instance, the seal element is used for securing a mechanical face seal ring. It is then sufficient that the end face heading the low pressure side of the mechanical face seal is designed in the described way.

By help of the invention a sealing element for securing of mechanical face seal rings has been obtained which makes possible a better securing as the spring constant of the element, thanks to its flexible cross section, is far lower if compared with a conventional O-ring. This means that the attachment will be more flexible in its axial direction which means a better function of the mechanical face seal and thus a better total sealing.

The enclosed drawings show different embodiments of the seal element according to the invention. Additional embodiments are however also possible within the scope of the invention.

## Claims

1. A seal element to be used within a groove in a cylinder formed surface for sealing with relation to a facing cylinder formed surface such as for securing of a mechanical face seal ring or its holder to a rotary shaft, characterized in,
that the cross section of the element has three sections (7), (8) and (9), section (7) being meant to make contact with the bottom (4) of the groove (3), section (9) heading in the opposite direction meant to make contact with the opposite cylinder formed surface (1) and section (8) forming a rib connecting the other two sections,
that the section (8) has a maximum axial length which at the most corresponds with two thirds of the full axial length of the total cross section,
that at least one of the axial end faces (14), (15) of the section (9) is placed at a mean distance from the side walls (5), (6) of the groove (3) which is at least one tenth of the full axial length of the cross section along a radial distance which, counted from the surface on the section (9), turned away from the section (8), corresponds with at least one quarter of the full radial length of the cross section.

2. A seal element according to claim 1, characterized in that the mean distance between at least one of the axially directed end faces (14), (15) of the section (9) and the side walls (5), (6) of the groove (3) is between one fifth and two fifths of the full axial length of the section which, counted from the surface on the section (9) turned away from the section (8), corresponds with at least one quarter of the full radial length of the section.

3. A seal element according to claim 1, characterized in that the one of the axially directed end faces (15) of the section (9) that shall have a certain distance relative the side wall (6) of the groove (3) is heading the low pressure side of the mechanical face seal.
